# EUROPEAN PATENT APPLICATION

(11) **EP 4 841 409 A1**
(43) Date of publication of application: **18.11.2026**
(21) Application number: 25305710.3
(22) Date of filing: 16.05.2025
(51) Int. Cl.: G06F 3/046, G06F 3/039, G06F 3/0354, G06F 3/0346

(54) **METHOD FOR ERASING DETECTION**

(71) Applicant: Advanced Magnetic Interaction, AMI, 38170 Seyssinet-Pariset (FR)
(72) Inventor: Hautson, Tristan, 38170 Seyssinet-Pariset (FR); Barjean, Kinia, 38170 Seyssinet-Pariset (FR); Riou, Sebastien, 38170 Seyssinet-Pariset (FR)
(74) Representative: Casalonga

(57) **Abstract**

A method (600) for erasing detection and/or tracking comprises:
a) obtaining eraser device information (610) related to an eraser device (100) comprising an eraser body (110) and a magnetic body (120) connected to the eraser body (110), the eraser device (100) being configured for an erasing operation on an interaction surface (210),
b) obtaining magnetic field measurements (620) associated with the magnetic body (120) and measured with a plurality of magnetometers (300),
c) obtaining interaction surface information (630),
d) determining a location (640) of the eraser device (100) based on the magnetic field measurements,
e) detecting and/or tracking an erasing operation (650) of the eraser device (100) on the interaction surface (210) based on the eraser device information, the interaction surface information and the determined eraser device location.

## Description

### TECHNICAL FIELD

The present disclosure relates to the technical field of determining and tracking a location of magnetic objects and/or passive accessories, and more specifically to a method for erasing detection and/or tracking, to an eraser device, to a system for erasing detection and/or tracking, and to the use of an eraser device with a tracking system.

### BACKGROUND

In the technical field of location determination and/or tracking of a magnetic object, the provision of one or more magnetometers allows to measure a magnetic field associated with the magnetic object. Magnetometer measurements enable determining and/or tracking of the location of the magnetic object within a sensing volume created by the plurality of magnetometers. The location may include a position and/or orientation of the magnetic object. In some cases, at least one magnetic object may be arranged in or coupled to a user-borne device, i.e., a device held or worn by a user. Some user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device.

An erasing device may be used for an erasing operation on an interaction surface, e.g. which may be a surface of any screen, blackboard or whiteboard. Current applications use capacitive or projective capacitive or infrared touch technology to capture the erasing operation (e.g., on an associated touch screen or other device like a digital whiteboard) digitally, i.e. to reproduce the erasing operation in a digital environment. However, these technologies are expensive and complex, especially if they are required for large interaction surfaces, for example in the size of a whiteboard. Although these technologies allow for the detection of the erasing operation on the interaction surface, the virtual reproduction of the erasing operation and correspondence between the eraser device and the interaction surface is not accurate, particularly since an orientation of the eraser device relative to the interaction surface cannot be taken into account.

In examples, systems may include infrared touch technology which distinguishes between different devices like a writing device or an eraser device based on the touch of the respective device on the touch surface, whereby tilt and/or edge contact detection of the writing device is very complex or not even possible. In case the eraser device has an edge contact with the touch surface, this system could recognize this device as a writing instrument instead of an eraser device and resulting in incorrect and inaccurate tracking. Furthermore, in other technologies, costly pressure sensing capabilities or active eraser devices (i.e., erasers with electronics) are required to detect contact and pressure applied between the eraser device and the interaction surface. Since erasing detection and/or tracking is inaccurate in these applications, this also leads to poor user experience when using such systems and devices.

Thus, an object of the present disclosure is to provide an improved method, system and device for detecting and/or tracking an erasing operation of an eraser device on an interaction surface.

### SUMMARY

The present disclosure relates to a method for erasing detection and/or tracking as defined in claim 1, to an eraser device as defined in claim 12, and to a system for erasing detection and/or tracking as defined in claim 14. The dependent claims depict preferred embodiments of the method and system.

According to a first aspect of the present disclosure, a method for erasing detection and/or tracking comprises obtaining eraser device information related to an eraser device. The eraser device comprises an eraser body and a magnetic body connected to the eraser body. The eraser device is configured for an erasing operation on an interaction surface. The method further comprises obtaining magnetic field measurements associated with the magnetic body and measured with a plurality of magnetometers, and obtaining interaction surface information. Additionally, the method comprises determining a location of the eraser device based on the magnetic field measurements. The method comprises detecting and/or tracking an erasing operation of the eraser device on the interaction surface based on the eraser device information, the interaction surface information and the determined eraser device location. Due to the method as described herein, an erasing operation with the eraser device, which may be electronically and/or electrically passive, on an interaction surface can be provided with high accuracy. Taking into account eraser device information, interaction surface information and the determined eraser device location for the detection and/or tracking of the erasing operation allows for a more precise virtual reproduction of the eraser device and associated erasing. In other words, an operation of the eraser device on the interaction surface can be determined and/or tracked, as well as reproduced virtually more accurately and seamlessly, resulting in improved user experience. An erasing result, including eraser device location determination and/or tracking (e.g., an erasing trajectory based on a translation and/or rotation of the eraser device on the interaction surface), eraser device and/or erasing properties like an erasing shape, eraser material or pressure applied on an interaction surface may be simultaneously captured and reproduced in the virtual or digital environment (see, e.g., eraser device information and detection and/or tracking of the contact condition, as well as associated virtual reproduction and settings as described herein). The associated system and device may be cost-effective and may be easily scalable to large interaction surfaces. In addition, an orientation of the eraser device relative to the interaction surface can be taken into account. As an example, in case the eraser device is operated by a user on an interaction surface defined on a whiteboard, eraser device characteristics and erasing properties (e.g., eraser device material, erasing shape, pressure applied) on the whiteboard may be rendered similarly in a digital environment (i.e., the erasing operation with the eraser device and its virtual reproduction may be similar).

According to a second aspect of the present disclosure, an eraser device comprises an eraser body comprising a longitudinal axis and an eraser surface. The eraser device comprises a magnetic body connected to the eraser body. The magnetic body is configured to generate a magnetic field and defines a magnetic moment vector. The eraser device comprises a cuboid shape having the longitudinal axis and the magnetic body is connected to the eraser body such that the magnetic moment vector extends substantially parallel to the eraser surface and/or the longitudinal axis. Alternatively, the eraser device comprises a cylindrical shape having the longitudinal axis and the magnetic body is connected to the eraser body such that the magnetic moment vector extends substantially perpendicular to the eraser surface and substantially parallel to the longitudinal axis.

According to a third aspect of the present disclosure, a system for erasing detection and/or tracking, the system comprises an eraser device comprising an eraser body and a magnetic body connected to the eraser body. The eraser device is configured for an erasing operation on an interaction surface. The system comprises a plurality of magnetometers configured to create a sensing volume and configured to measure a magnetic field associated with the magnetic body.

The system may be configured to execute the method according to the first aspect of the present disclosure. The system may be configured to determine a location of the eraser device based on the magnetic field measurements. The system may be configured to detect and/or track an erasing operation of the eraser device on the interaction surface based on eraser device information related to the eraser device, interaction surface information and the determined eraser device location.

According to a fourth aspect of the present disclosure, a use of an eraser device according to the second aspect of the present disclosure with a tracking system comprising a plurality of magnetometers and being configured for detecting and/or tracking an erasing operation of the eraser device on an interaction surface is disclosed.

According to further aspects of the present disclosure, the method according to the first aspect is a computer-implemented method. A computer system is configured to execute the computer-implemented method. A computer program is configured to execute the computer-implemented method. A computer-readable medium or signal storing the computer program is also provided.

The above features, embodiments and advantageous technical effects described for the method may also apply to the eraser device, the system, the computer system, the computer program, and the computer-readable medium or signal.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a process flow diagram of a method for erasing detection and/or tracking according to aspects of the present disclosure;
- **Fig. 2**: is a schematic view of a system for erasing detection and/or tracking according to aspects of the present disclosure;
- **Figs. 3A to 4B**: are schematic views and cross-sectional views of an eraser device according to a first embodiment of the present disclosure;
- **Figs. 4C, 4D and 5**: are schematic views of contact conditions of the eraser device according to the first embodiment with the interaction surface;
- **Figs. 6A to 6C**: are schematic views and cross-sectional views of an eraser device according to a second embodiment of the present disclosure;
- **Figs. 7 and 8**: are schematic views of contact conditions of the eraser device according to the second embodiment with the interaction surface;
- **Figs. 9 to 12**: are schematic views of adapted and/or selected settings of a virtual reproduction of the erasing operation with an eraser device according to the first and/or the second embodiment, based on the detected and/or tracked erasing operation.

### DETAILED DESCRIPTION

Embodiments of a method for erasing detection and/or tracking, a system for erasing detection and/or tracking and an eraser device according to aspects of the present disclosure will be described with reference to the drawings as follows.

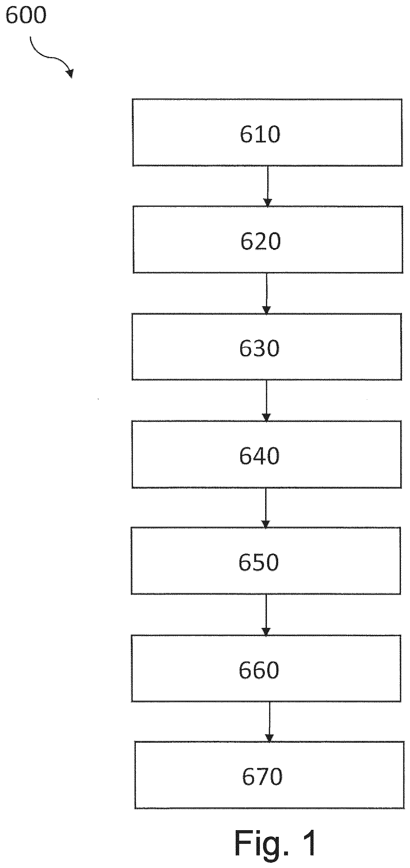

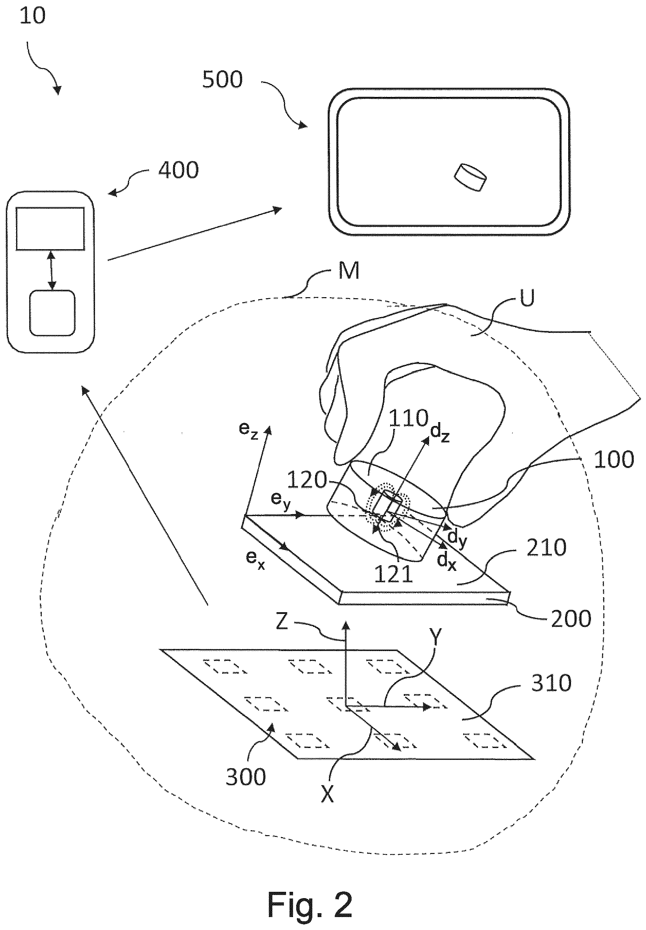

Fig. 1 is a process flow diagram of a method 600 for erasing detection and/or tracking according to aspects of the present disclosure. Fig. 2 is a schematic view of a system 10 for erasing detection and/or tracking according to aspects of the present disclosure. In other words, the system 10 may be adapted for detecting and/or tracking an erasing operation of the eraser device 100 on an interaction surface 210 and/or a manipulation of the eraser device 100 within a sensing volume M. As shown in Fig. 2, the system 10 for erasing detection and/or tracking comprises an eraser device 100. The eraser device 100 comprises an eraser body 110 and a magnetic body 120 connected to the eraser body 110. The eraser device 100 may be configured for an erasing operation on an interaction surface 210. The system 10 further comprises a plurality of magnetometers 300 configured to create a sensing volume M and configured to measure a magnetic field associated with the magnetic body 120. In other words, the magnetic body 120 may be configured to generate a magnetic field which may be measured with the plurality of magnetometers 300. The system is configured to execute the method 600 for erasing detection and/or tracking as described in more detail below. More specifically, the system 10 is configured to determine a location of the eraser device 100 based on the magnetic field measurements. The system 10 is configured to detect and/or track an erasing operation of the eraser device 100 on the interaction surface 210 based on eraser device information related to the eraser device 100, interaction surface information and the determined eraser device location.

Referring to Fig. 2, the plurality of magnetometers 300 (i.e., at least two magnetometers) is configured to measure the magnetic field generated by the magnetic body 120, as well as the magnetic field generated by any additional magnetic body manipulated within the sensing volume M. The system 10 may be configured to determine the location of the eraser device 100, as well as to detect and/or track the erasing operation, in at least five degrees of freedom based on the magnetic field measurements. In some embodiments, the system 10 may comprise or may be coupled with at least one processing unit 400 configured to execute the method 600 as described herein. The processing unit 400 may be configured to control a virtual reproduction of the eraser device 100 and/or erasing operation on at least one output device 500 of the system 10, which may comprise a display or screen. In embodiments, the system 10 may comprise the eraser device 100 and a digital device. The digital device may comprise the plurality of magnetometers 300. The plurality of magnetometers 300 may be fixedly arranged in a casing of the digital device. The plurality of magnetometers 300 define a fixed position and/or orientation with respect to each other. A magnetometer plane 310 (indicated in Fig. 2) may be defined by a plane that extends through a majority of the plurality of magnetometers 300. More specifically, the magnetometer plane 310 may extend through centres, more specifically geometric centres, of a majority of the plurality of magnetometers 300. In other words, most of the magnetometers of the plurality of magnetometers 300 may be arranged in a common plane, i.e., the magnetometer plane 310. However, one or more magnetometers of the plurality of magnetometers 300 may be distanced and/or inclined with respect to the common plane, e.g., due to manufacturing issues and/or tolerances and/or manufacturing design constraints. The magnetometer plane 310 may additionally or alternatively be defined by a plane in which the magnetometers of the plurality of magnetometers 300 are predominantly arranged. The digital device may comprise the processing unit 400 and/or the at least one output device 500.

The system 10 may comprise an interaction support 200 comprising the interaction surface 210. In other words, the interaction surface 210 may be defined on a surface of the interaction support 200. In some examples, the interaction support 200 may be a whiteboard, a blackboard or an electronic interactive screen. In these cases, the interaction surface 210 may be a whiteboard surface, a blackboard surface or an interactive screen surface. The plurality of magnetometers 300 may be connected, more specifically immovably connected, to the interaction support 200.

In more detail, the plurality of magnetometers 300 may be rigidly (e.g., integrated) or removably connected with the interaction support 200. In examples, the plurality of magnetometers 300, or the digital device, may be integrated in a stand or support configured to receive the interaction support 200 with the interaction surface 210 as described herein. The interaction support 200 may be removably coupled with the stand or support. Thus, in case the interaction support 200 and/or interaction surface 210 is worn, it may be replaced with a new interaction support comprising the interaction surface. In some embodiments, the digital device as described above may comprise or be coupled with the interaction support 200. In an example, the digital device may be the electronic interactive screen. The interaction surface 210 may be plane or may be curved. In case the interaction surface 210 comprises a curved shape, it may be modeled as a plurality of partial, plane surfaces which together form the interaction surface 210. In some embodiments, the interaction support 200 may comprise a first and at least one second interaction support portion, and the interaction surface 210 may comprise a first interaction surface and at least one second interaction surface provided on the respective support portions. The plurality of magnetometers 300 may be arranged between the first and second interaction support portions. E.g., a whiteboard may comprise two opposite interaction portions, a first portion comprising the first interaction surface and an opposite, second portion comprising the second interaction surface. By arranging the plurality of magnetometers therebetween, erasing operation of the eraser device 100 on the first interaction surface and on the second interaction surface may be detected and/or tracked. The at least one processing unit 400 may be configured to represent the controlled virtual reproduction of the eraser device 100 and/or erasing operation on the output device 500. In other words, the processing unit 400 may be configured to represent the eraser device 100 and/or the erasing operation on the interaction surface 210 as a virtual eraser device and/or virtual erasing operation on the at least one output device 50. The representation and/or movement of the virtual eraser device 100 (and/or virtual erasing operation) on the at least one output device 500 may be based on a virtual reproduction of the determined and/or tracked erasing operation on the interaction surface 210. The processing unit 400 may be configured to adapt and/or select at least one setting of the virtual reproduction. The virtual reproduction, representation, adaption and/or selection of at least one setting will be described in more detail in connection with the method 600 below. The reproduction on the at least one output device 500 may be a motion of a cursor on the output device 500. In embodiments, the reproduction may be any icon (e.g., an arrow, a picture, a virtual reproduction of the eraser device) and/or any 3D representation (e.g., a virtual eraser). During the erasing operation, the eraser device 100 may be in contact with the interaction surface 210 on the interaction support 200. In some examples, the eraser device 100 may also be operated within the sensing volume M but not on the interaction support 200 (i.e., in the air). In this case, the eraser device 100 may be used, e.g., as a pointer. In some embodiments, the eraser device 100 may be coupled with a writing instrument, a drawing instrument or a toy.

The magnetometers 300 may be communicatively coupled with the at least one processing unit 400, particularly to exchange magnetic field measurements. The at least one processing unit 400 may be configured to collect magnetic field measurements from the plurality of magnetometers. The sensing volume M may have an ellipsoidal form. The magnetometers 300 may be configured to measure the magnetic field created by the magnetic body 120 in the directions of a reference coordinate system XYZ, as indicated in Fig. 2. The system 10, more specifically the digital device, may comprise the reference coordinate system XYZ. The reference coordinate system XYZ may comprise a first reference axis X, a second reference axis Y and a vertical reference axis Z. The first reference axis X and the second reference axis Y may be defined on or parallel to the magnetometer plane 310 and may be orthogonal to each other. The vertical reference axis Z may be orthogonal to the magnetometer plane 310. The vertical reference axis Z may extend through a centre of the plurality of magnetometers 300. Each magnetometer 300 may be configured to perform magnetic field measurements in the direction of one axis (i.e., one dimension), two axes (i.e., two dimensions), or three axes (i.e., three dimensions). The number of magnetometers 300 provided may depend on the desired size of the sensing volume M within which the eraser device 100 is operated. In examples, a first number of magnetometers may be integrated in a first magnetometer support and at least a second number of magnetometers may be integrated in at least one second magnetometer support, which may be at an angle relative to the first magnetometer support. The magnetometers 300 may be configured to collect magnetic field measurements associated with the magnetic body 120 within the sensing volume M up to a maximum measurement distance, wherein the maximum measurement distance may be a distance within which the magnetic field measurements can be provided with acceptable reliability and/or accuracy. In embodiments, the maximum measurement distance may be 18cm, more specifically 15cm. During use, the magnetic body 120 described herein may be operated within the maximum measurement distance. The minimum magnetic field generated by the magnetic body 120 that may be tracked with system 1 may comprise at least 1 micro tesla, preferably at least 100 micro tesla, e.g., which may be provided within the distance as mentioned above.

An aspect of the present disclosure relates to the use of an eraser device 100 as described herein with a tracking system comprising a plurality of magnetometers 300 and being configured for detecting and/or tracking an erasing operation of the eraser device 100 on an interaction surface 210. The tracking system may be configured according to the system 10 described herein. The tracking system may comprise the plurality of magnetometers 300 configured to create a sensing volume and configured to measure a magnetic field associated with the magnetic body 120 of the eraser device 100. The tracking system may be configured to determine and/or track the location of the eraser device 100 based on the magnetic field measurements. The tracking system may be configured to detect and/or track the erasing operation of the eraser device 100 on the interaction surface 210 based on eraser device information related to the eraser device 100, interaction surface information and the determined and/or tracked eraser device location as described. The tracking system may comprise or be combinable with the interaction support 200 comprising the interaction surface 210 as described herein.

In the following, embodiments of the eraser device 100 which may be operated on the interaction surface 210 in an erasing operation will be described in more detail. The eraser device 100 may be electrically and/or electronically passive. Electrically passive means that the eraser device 100 may not comprise a power source (e.g., batteries) and/or means to receive power (e.g., wireless power transmission via an inductive coil) for powering a feature (e.g., an electronic feature) of the eraser device 100. Electronically passive means that no computation or processing occurs (or happens) on the eraser device 100. However, in some embodiments, the eraser device 100, may still comprise electronic features such as light emitters, buttons, and/or transmission means such as RF (Radio Frequency), e.g., BLE (Bluetooth Low Energy). In some embodiments, the eraser device 100 may comprise a power source such as a battery and/or a wireless power receiver to receive power wirelessly.

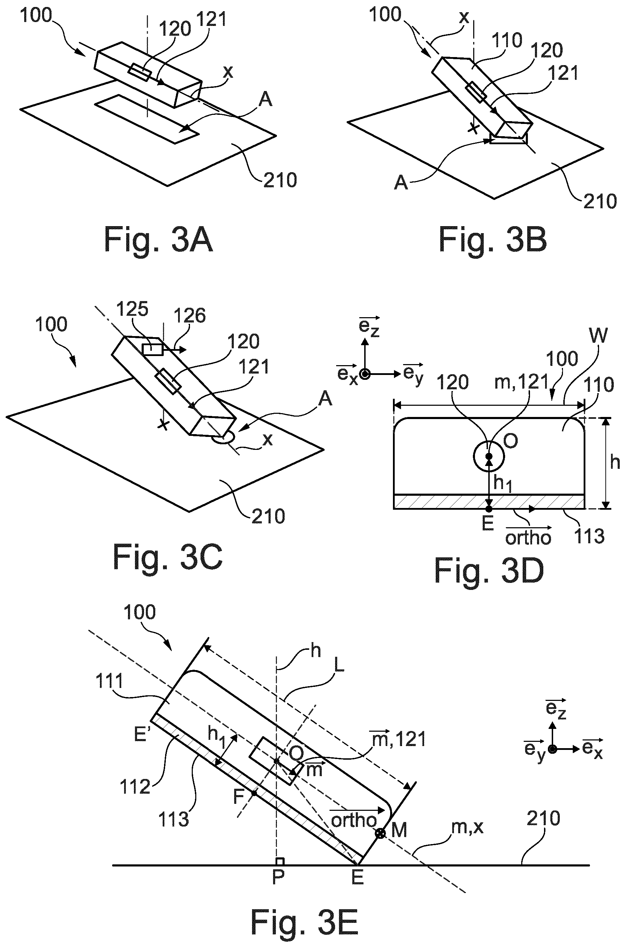

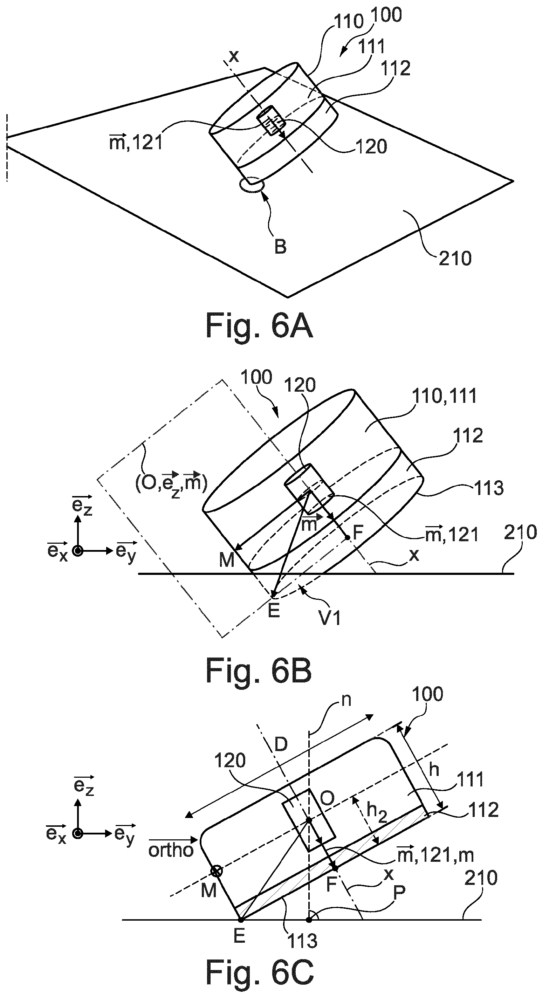

Figs. 3A to 4B are schematic views and cross-sectional views of the eraser device 100 according to a first embodiment, and Figs. 6A to 6C are schematic views and cross-sectional views of the eraser device 100 according to a second embodiment. As shown in these embodiments, the eraser device 100 comprises an eraser body 110 comprising a longitudinal axis x and an eraser surface 113. The eraser device 100 may be configured for an erasing operation on the interaction surface 210 with the eraser surface 113. In other words, the eraser surface 113 may be the surface portion of the eraser device 100 which is adapted for erasing on the interaction surface 210. During the erasing operation, the eraser surface 113 is oriented towards the interaction surface 210 and at least portions thereof are in contact with the interaction surface 210. The eraser surface 113 may include a bottom surface of the eraser device 100, an eraser edge or eraser edges defined by or surrounding the bottom surface and/or a circumferential surface portion surrounding the bottom surface and the eraser edge(s).

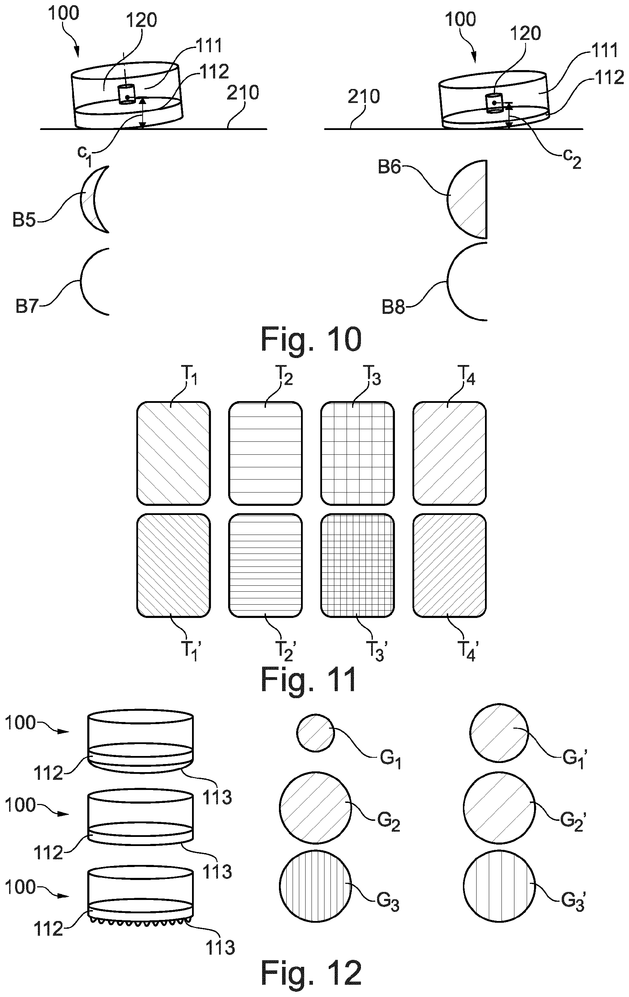

As shown e.g. in Figs. 3D, 3E, 6B and 6C, the eraser body 110 may comprise a main body portion 111 and an eraser portion 112 connected to the main body portion 111. The eraser portion 112 may comprise or define the eraser surface 113. The eraser portion 112 may be removably connected to the main body 111. Thus, and in case the eraser portion 112 is worn, it may be replaced with a new eraser portion 112. The eraser portion 112 may define a volume and may be compressible. The eraser portion may comprise a compressible and/or a flexible material. The compressible and/or flexible material may be or comprise one or more of a sponge material, a felt material and a textile material, i.e., materials adapted for the erasing operation. The magnetic body 120 may be fixedly connected or removably connected to the eraser body 110, more specifically to the main body portion 111. When connected, the magnetic body 120 may be immovable relative to the eraser body 110, more specifically relative to the main body portion 111. In other words, when connected, the location (i.e., position and/or orientation) of the magnetic body 120 relative to the eraser body 110, more specifically relative to the main body portion 111, is fixed and defined. The magnetic body 120 may be arranged within the eraser body 110, more specifically withing the main body portion 111. If the magnetic body 120 is removably connected to the eraser body 110 and the eraser body 110 is worn, the magnetic body 120 may be salvaged from the eraser body 110 and may be connected to a new eraser body 110. Referring to Fig. 12 on the left, the eraser portion 112 may be configured such that the eraser surface 113 comprises a rounded, flat and/or wavy shape.

The magnetic body 120 is configured to generate a magnetic field and defines a magnetic moment vector 121, which will be described in more detail below. The magnetic body 120 may comprise or may be a permanent magnet, more specifically a single permanent magnet. The magnetic body 120 may comprise a cylindrical shape. As indicated in Figs. 3E and 6C, the magnetic body 120 may comprise a magnetic body longitudinal axis m extending along a length of the magnetic body 120. The magnetic body 120 may be connected with the eraser body 110 such that the magnetic body longitudinal axis m extends coaxially with the longitudinal axis x. The magnetic body 120 may be configured to define a magnetic moment vector 121 (or normalized vector *̅m̅*̅, which will be discussed later). The magnetic moment vector 121 may be substantially coaxial with the magnetic body longitudinal axis m. In embodiments, the magnetic body 120 may have a shape with the magnetic body longitudinal axis m about which the magnetic body 120 is rotationally symmetric, for example the cylindrical shape. When the magnetic body 120 with a rotationally symmetric magnetic field is desired, in an ideal case, the magnetic moment vector 121 (or magnetization direction) coincides with the magnetic body longitudinal axis m about which the magnetic body 120 is rotationally symmetric. However, an almost perfect alignment of the magnetic moment vector 121 (e.g. less than 0.5° angular deviation) and magnetic body longitudinal axis m are very complex and expensive. Such angular deviation can cause errors in orientation measurements of the magnetic body 120 and thus in inaccurate location determination of the eraser device 100. However, such angular deviation may be reduced or eliminated, as also described, e.g., in patent application EP4390636A1.

In some embodiments (not shown in the Figs.), the magnetic body 120 may comprise a first magnetic body portion and at least one second magnetic body portion connected to the first magnetic body portion. Each of the first and second magnetic body portions may be configured to generate a magnetic field. The first and second magnetic body portions together may define the magnetic body longitudinal axis m and/or the magnetic moment vector 121. More specifically, the first and second magnetic body portions may be firmly coupled (e.g., via adhesive) and rotationally oriented relative to each other such that the magnetic moment vector 121 is substantially coaxial with the magnetic body longitudinal axis m. In other words, the first and second magnetic body portions being coupled with each other together form the magnetic body longitudinal axis m, as well as the resulting magnetic moment vector 121. Due to these features, an angular deviation can be reduced and improved location determination of the magnetic body 120 and thus the eraser device 100 can be provided without the usage of complex and/or costly estimation models.

The term "magnetic body" may refer to an object which may comprise components of or may be made of magnetic material, i.e., a material that has magnetic properties measurable by at least one magnetometer 300. In embodiments, the magnetic body 120 and/or any additional magnetic body (e.g., at least one second magnetic body 125) may be configured to generate a non-zero magnetic field. They may comprise a paramagnetic or diamagnetic material. In embodiments, they may comprise a ferromagnetic material or a ferrimagnetic material. As already mentioned, the magnetic body 120 may be a permanent magnet. The magnetic body 120 and/or any additional magnetic body may be configured to create or generate a symmetric magnetic field, more specifically wherein the magnetic field may be rotationally symmetric. A rotation of the magnetic body 120 may thus be detectable about a first rotation axis and a second rotation axis of the magnetic bodies, more specifically wherein the first rotation axis may be perpendicular to the second rotation axis. However, a rotation about a third rotation axis (being perpendicular to the first rotation axis and the second rotation axis) may not be detectable since the magnetic field may be rotationally symmetric. The magnetic body 120 may be axially magnetized in this case (see, e.g., magnetization axis or magnetic moment vector). However, in other embodiments (not shown), the magnetic body 120 may comprise a magnetization axis being at an orientation with respect to the magnetic body 120 such that a rotation of the magnetic field may be detectable about a first rotation axis, a second rotation axis and a third rotation axis of the magnetic body 120. In this case the magnetic body 120 may be configured to create or generate an asymmetric magnetic field, more specifically wherein the magnetic field may be rotationally asymmetric. This may be the case for a magnetic body 120 being width magnetized or thickness magnetized. The above features may also apply to the at least one second magnetic body 125 described herein (e.g., which may also be a permanent magnet).

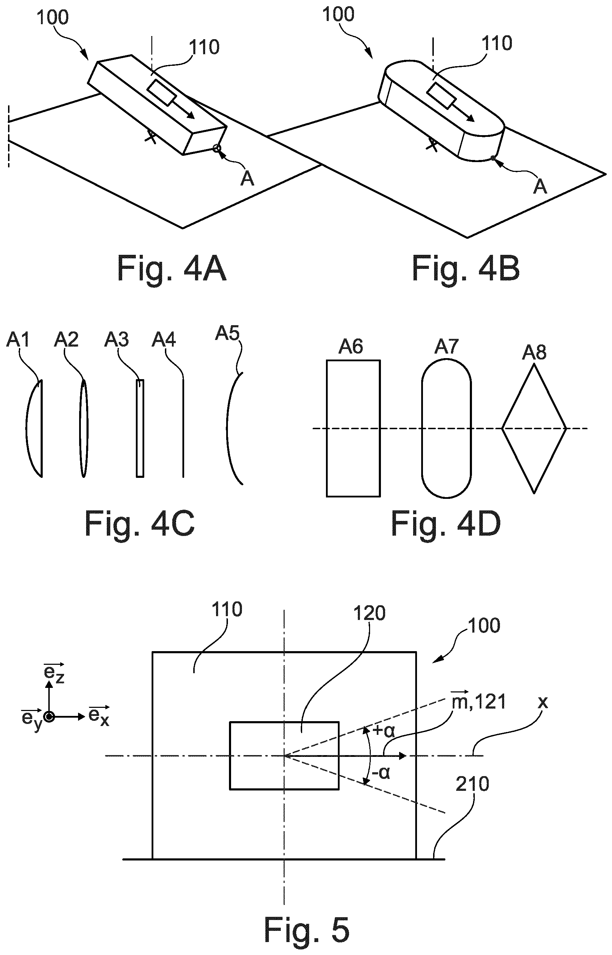

Referring to the embodiment of Figs. 3A to 4B, the eraser device 100 may substantially comprise a cuboid shape having the longitudinal axis x. The eraser portion 112 may comprise substantially a cuboid shape coupled with the main body portion 111. In this case, the erasing surface 113 may comprise a bottom surface with a substantially rectangular shape, straight eraser edges surrounding the bottom surface and flat side portions surrounding the bottom surface and/or eraser edges. However, in some embodiments as shown in Fig. 4B, some portions of the eraser body 110 may be curved, e.g., the front and/or rear portions may comprise a curved shape. In some embodiments, the eraser body 110 may comprise a parallelepiped or similar shape. As shown in Figs. 3D and 3E, the eraser body 110 may comprise a width w, a height h and a length L. The longitudinal axis x may extend along the length L of the eraser body 110 and through a center of the eraser body 110 or of the main body portion 111. The magnetic body 120 may be connected to the eraser body 110, more specifically may be arranged within the main body portion 111, such that the magnetic moment vector 121 extends substantially parallel to the eraser surface 113 and/or the longitudinal axis x. In case the magnetic body 120 is configured to generate a symmetric magnetic field, rotation of the magnetic body 120 about rotation axes being oriented vertical to the magnetic moment vector 121 may be detected, i.e., pitch and yaw movement of the eraser device 100 shown in Figs. 3A to 4B may be detected.

However, rotation about the magnetic body longitudinal axis m (i.e., roll movement) may not be detected. In the embodiments of Figs. 3A to 3B it may thus be difficult to accurately determine an edge contact of the side edges (left and right) with the interaction surface 210. Referring to Fig. 3C, in some embodiments, the magnetic body 120 may be a first magnetic body 120 and the eraser device 100 may comprise at least one second magnetic body 125 connected to the eraser body 110, more specifically to the main body portion 111, at a non-zero distance to the first magnetic body 120. The first and second magnetic bodies may thus be separated from each other. The features described herein for the magnetic body 120 may analogously apply to the at least one second magnetic body 125. The at least one second magnetic body 125 may be configured to generate a magnetic field and defines a second magnetic moment vector 126. The at least one second magnetic body 125 may be connected to the eraser body 110, more specifically to the main body portion 111, such that the second magnetic moment vector 126 is not coaxial to the first magnetic moment vector 121. In embodiments, the second magnetic moment vector 126 extends at an angle (e.g., perpendicular or any other angle larger than zero) to the first magnetic moment vector 121. In some embodiments, the second magnetic moment vector 126 extends parallel but not coaxial to the first magnetic moment vector 121. In these cases, a resulting magnetic field (described in more detail below) measured with the plurality of magnetometers 300 is asymmetric so that a pitch, roll and yaw movement of the eraser device 100 may be detected with high accuracy.

Referring to Figs. 6A to 6C, the eraser device 100 may substantially comprise a cylindrical shape having the longitudinal axis x. The eraser portion 112 may comprise substantially a cylindrical shape connected to the main body portion 111. In this case, the erasing surface 113 may comprise a bottom surface with a substantially circular shape, a circular eraser edge surrounding the bottom surface and a circumferential side portion surrounding the bottom surface and/or eraser edge. As shown in Fig. 6C, the eraser body 110 may comprise a diameter D and a height h. The longitudinal axis x may extend along the height h of the eraser body 110 and through a center of the eraser body 110 or of the main body portion 111. The magnetic body 120 may be connected to the eraser body 110, more specifically may be arranged within the main body portion 111, such that the magnetic moment vector 121 extends substantially perpendicular to the eraser surface 113 (more specifically to the bottom surface) and substantially parallel, more specifically coaxial, to the longitudinal axis x. The longitudinal axis x may be a symmetrical axis, more specifically a rotationally symmetrical axis, of the eraser device 100. The magnetic body longitudinal axis m may extend coaxially to the longitudinal axis x. The magnetic body 120 may be configured to generate a symmetric magnetic field. However, since the magnetic body 120 is arranged within the eraser body 110 such that the magnetic moment vector 121 extends substantially perpendicular to the eraser surface 113, pitch and yaw movement of the eraser device 100 can be detected. In other words. contact of the erasing surface 113 with the interaction surface 210 can be detected with hight accuracy, without providing the at least one second magnetic body 125. Nevertheless, also the at least one second magnetic body 125 may be provided in this embodiment to detect rotation about the magnetic body longitudinal axis m.

The plurality of magnetometers 300 may be configured to measure the (resulting) magnetic field which is based on the sum of the magnetic fields of each magnetic body (i.e., the superposition of the magnetic fields of each magnetic body provided). The (resulting) magnetic field of the magnetic body 120 may also be described with a magnetic signature the magnetic body 120 comprises. In other words, the magnetic body 120 may be configured to define a magnetic signature. The magnetic signature may be detectable with the plurality of magnetometers 300. The magnetic signature may be indicative of magnetic field strength (e.g., intensity), magnetic field shape (e.g., shape, symmetry, deformation) and/or magnetic field location (e.g., position, orientation including direction). The magnetic signature of the magnetic body 120 may comprise a set of vectors describing a magnetic vector field of the magnetic objects (more specifically, the resulting magnetic field of the magnetic body 120). As already mentioned above, the magnetic body 120 may comprise the magnetic moment vector 121 and/or a position vector associated with the magnetic field. In other words, the magnetic body 120 may be modeled as a magnetic dipole being defined by the magnetic moment vector 121 and/or the position vector. In some embodiments, a Coulomb model may be implemented, which may allow a modeling of complex magnetizations of the magnetic body 120. In examples, a Dipolar model, an Amperian model and/or mapping based on a Look-Up Table (LUT) may be implemented for modeling complex magnetizations of the magnetic body 120. Based on the above models, the magnetic field generated by the magnetic body 120 may be simulated and/or measured more accurately, particularly taking into account the specific shape of the magnetic body 120. The magnetic moment vector 121 and/or the position vector may be used to determine a magnetic field change and/or a location change eraser device 100 in an erasing operation. The magnetic moment vector 121 may define a magnetic body orientation and/or a magnetic body strength, i.e., the magnetic field strength of the magnetic body 220. The magnetic body strength may be related to the magnetization of the magnetic body 120 and its volume and/or shape. Magnetization may be related to the material of the magnetic body 120, e.g., ferrite neodymium. In an example, in case the eraser device 100 comprises the at least one second magnetic body 125, the magnetic signature of the eraser device 100 may be different than the magnetic signature of an eraser device 100 comprising only the magnetic body 120. Similarly, in case the magnetic body 120 comprises the first and second magnetic body portions as described above and which may comprise a shape so as to define different magnetic fields, the magnetic signature of the eraser device 100 may be different as compared to an eraser device 100 which comprises a magnetic body 220 in the form of a single permanent magnet.

The individual magnetic signature defined by the eraser device 100 may be detected based on the magnetic field measurements. The processing unit 400 may be configured to identify eraser device information based on the magnetic signature. In other words, the magnetic signature defined by the magnetic body 120 may be indicative of eraser device information related to the eraser device 100 that is used in an erasing operation, as will be described in detail below. In examples, at least two eraser devices 100 may be operated within the sensing volume M. Each of the eraser devices 100 may comprise an individual magnetic signature which may be indicative of individual eraser device information. The tracking and/or detection of the erasing operation, control, and/or representation of a virtual reproduction of the individual eraser device 100 may be based on the individual magnetic signature and associated individual eraser device information. In case a writing instrument is operated in the sensing volume M, the magnetic signature of the writing instrument may be different from the magnetic signature of the eraser device 100 so that the system 10 may be configured to differentiate between the writing instrument and the eraser device 100. This may also be the case if the eraser device 100 is coupled with the writing instrument.

Referring to Fig. 1, the method 600 according to aspects of the present disclosure will be described in more detail. The method 600 comprises obtaining eraser device information 610 related to an eraser device 100. As mentioned above, the eraser device 100 comprises an eraser body 110 and a magnetic body 120 connected to the eraser body 110. The eraser device 100 may be configured for an erasing operation on an interaction surface 210. The method 600 further comprises obtaining magnetic field measurements 620 associated with the magnetic body 120 and measured with a plurality of magnetometers 300. The method 600 comprises obtaining interaction surface information 630. Furthermore, the method 600 comprises determining a location 640 of the eraser device 100 based on the magnetic field measurements.

In embodiments, the method 600 may comprise determining the location 640 of the eraser device 100 relative to the interaction surface 210 based on the magnetic field measurements and the interaction surface information. In embodiments, the eraser device 100 may be tracked, e.g., over a time period comprising multiple time samples. At each time sample, the method 600 may comprise determining location of the eraser device 100. In addition, the method comprises detecting and/or tracking an erasing operation 650 of the eraser device 100 on or relative to the interaction surface 210 based on the eraser device information, the interaction surface information and the determined eraser device location. Due to the features of the method 600, system 10 and eraser device 100 as described above, an erasing operation with the eraser device 100 on an interaction surface 210 can be provided with high accuracy. Taking into account eraser device information, interaction surface information and the determined and/or tracked eraser device location for erasing operation detection and/or tracking allows for a more precise virtual reproduction of the eraser device 100 and associated erasing. In other words, an operation of the eraser device 100 on the interaction surface 210 can be determined and/or tracked, as well as reproduced virtually more accurately and seamlessly, resulting in improved user experience. An erasing result, including eraser device location determination and/or tracking (e.g., an erasing trajectory based on a translation and/or rotation of the eraser device on the interaction surface), eraser device and/or erasing properties like an erasing shape, eraser material or pressure applied on an interaction surface may be simultaneously captured and reproduced in the virtual or digital environment (see, e.g., eraser device information and detection and/or tracking of the contact condition, as well as associated virtual reproduction and settings as described herein).. The associated system 10 and device 100 may be cost-effective and may be easily scalable to large interaction surfaces 210. In addition, an orientation of the eraser device 100 relative to the interaction surface 210 can be taken into account. As an example, in case the eraser device 100 is operated by a user on an interaction surface 210 defined on a whiteboard, eraser device characteristics and erasing properties (e.g., eraser device material, erasing shape, pressure applied) on the whiteboard may be rendered similarly in a digital environment (i.e., the erasing operation with the eraser device 100 and its virtual reproduction may be similar).

Eraser device information may comprise one or more of eraser device geometry information, eraser device characteristics information, and magnetic body arrangement information. Eraser device geometry information comprises information of one or more of an eraser device shape and an erasing surface shape. The eraser device shape information may include a geometric size and/or form of the eraser device. The erasing surface shape information may include information of a size and geometric shape of the erasing surface 113. As already mentioned above, the eraser body 110 may comprise a main body portion 111 and an eraser portion 112. The eraser device characteristics information may comprise one or more of a thickness, a volume and a material of the eraser portion 112. The eraser portion 112 may comprise a compressible material. The thickness of the eraser portion 112 may be linked to the compressibility of the eraser portion 112 based on a force or pressure applied. Eraser device geometry information may include information of one or more of a geometric size, volume and a shape of the eraser portion 112 and the main body portion 111. Eraser device geometry information may comprise information of a location (i.e., position and/or orientation) of the eraser portion 112 relative to the main body portion 111. Magnetic body arrangement information may comprise a location (i.e., a position and/or an orientation) of the magnetic body 120 relative to the eraser body 110, particularly relative to the main body portion 111. If provided, the same may apply to the at least one second magnetic body 125. In embodiments, magnetic body arrangement information may include one or more of a material, a magnetization, a shape and/or volume, and a magnetic body strength of the magnetic body 120 and/or the at least one second magnetic body 125.

Methods for determining and/or tracking the location of a magnetic body 120 based on magnetometer measurements within a sensing volume and associated algorithms are known in the prior art, for example as described in US 2020/116524 A1 or US 2015/057969 A1. Referring to the aspects of the present disclosure, the principles described herein for the magnetic body 120 may also apply to any other additional magnetic body, e.g., the at least one second magnetic body 125. Furthermore, the features, steps and settings as disclosed herein apply for all embodiments of the eraser device 100. Although some features (e.g., the settings) are only described referring to one embodiment (e.g., for Figs. 6A to 6C), it also applies to the other embodiment shown e.g., in Figs. 3A to 4B. Referring to the method 600 illustrated in Fig. 1, determining a location 640 of the eraser device 100 based on the magnetic field measurements may comprise determining a magnetic body location within the sensing volume M created by the plurality of magnetometers 300 based on obtained magnetic field measurements. The method may comprise defining a reference coordinate system XYZ (i.e., the reference coordinate system as described above). Determining the magnetic body location may comprise determining an absolute magnetic body location indicative of a position and/or an orientation of the magnetic body relative to the reference coordinate system XYZ. The absolute magnetic body location may be determined based on implementing a mathematical model associating each measurement of the magnetometers 300 with a location of the magnetic body 120 in the reference coordinate system XYZ. Each magnetometer of the plurality of magnetometers 300 may be a vector magnetometer and may be configured to measure the magnetic field in one, two or three dimensions.

Determining the location of the eraser device 100 may be based on the absolute magnetic body location and eraser device information. As described above, eraser device information may include eraser device geometry information and/or magnetic body arrangement information. Based on this information, an arrangement (including position and/or orientation) of the magnetic body 120 relative to the eraser device 100 may be known. Determining the location of the eraser device 100 may comprise determining a relative magnetic body location indicative of a relative position and/or a relative orientation of the magnetic body 120 relative to the eraser device, more specifically to an eraser device coordinate system dₓ, d_{y}, d_{z} (see, e.g., Fig. 2). Based on the determined absolute location of the magnetic body 120 and the knowledge of the arrangement of the magnetic body 120 relative to the eraser device 100, the location of the eraser device 100 may be determined. As described above, the magnetic body 120 may be a first magnetic body and the eraser device 100 may comprise at least one second magnetic body 125 connected to the eraser body 110 at a non-zero distance to the first magnetic body 120. In this case, the method 600 may comprise obtaining magnetic field measurements 620 associated with the first magnetic body 120 and the at least one second magnetic body 125 measured with the plurality of magnetometers 300 and determining the location 640 of the eraser device 100 based on the magnetic field measurements of the first magnetic body 120 and the at least one second magnetic body 125. The first and second magnetic bodies 120, 125 may allow for location tracking and determination of the eraser device 100 in at least six degrees of freedom. This may be advantageous, when the eraser device comprises the cuboid shape. Thereby, the erasing operation, e.g., which portions of the eraser device are in contact with the interaction surface, may be detected with high accuracy. In some embodiments, the magnetic body 120 may be configured to generate an asymmetric magnetic field. In this case, rotation about the longitudinal axis of the magnetic body 120 may be detectable. In some embodiments, a parallelepiped magnet may be used.

The determined location of the eraser device 100 comprises a position and/or orientation of the eraser device 100. Detecting and/or tracking an erasing operation 650 may comprise determining a position and/or orientation of the eraser device 100 relative to the interaction surface 210, more specifically based on the determined location of the eraser device 100 and interaction surface information. Interaction surface information comprises one or more of a location of the interaction surface 210 relative to the plurality of magnetometers 300 and interaction surface characteristic information. Interaction surface characteristic information may include the type, material and/or hardness of the interaction surface 210. The location of the interaction surface may include the definition of a size and geometry of the interaction surface 210 relative to the plurality of magnetometers 300. Interaction surface characteristic information may be taken into account when determining the contact condition as described below. As already mentioned above, the interaction surface 210 may be plane or may be curved. In case the interaction surface 210 comprises a curved shape, it may be modeled as a plurality of partial, plane surfaces which together form the interaction surface 210. Interaction surface information may include associated information, more specifically relative to the plurality of magnetometers 300.

Referring to Fig. 1, detecting and/or tracking the erasing operation 650 may comprise detecting and/or tracking a contact condition between the eraser device 100 and the interaction surface 210. In some examples, detecting and/or tracking a contact condition may comprise determining a contact shape and/or a contact area between the eraser device 100 and the interaction surface 210. The method 600 and system 10 may be configured to determine a virtual intersection of the eraser device 10 and the interaction surface 210, which will be described in more detail below. The determined contact shape and/or contact area may be used for controlling a virtual erasing shape and/or virtual erasing area. Determining the contact shape and/or contact area is based on the determined position and/or orientation of the eraser device 100 relative to the interaction surface 210 and based on the eraser device information. Furthermore, determining the contact shape and/or contact area may be based on the interaction surface information, e.g., the interaction surface location and/or surface characteristic information as described above. Based on the eraser device location including position and orientation, interaction surface information, and eraser device information it is possible to determine when the eraser device 100 is in contact with the interaction surface 210. The contact shape may refer to the shape of the contact between the eraser device 100, more specifically the erasing surface 113 and the interaction surface 210. In some examples, the contact shape may be an ellipsoid, a half ellipsoid, a segment of a circle, a rectangle, a trapeze or any other shape, more specifically representing the contact condition (e.g., intersection) of the eraser device 100 and interaction surface 210. In some embodiments, the contact shape may be a straight line. The contact area may be the area of the eraser device 100 which is in contact with the interaction surface 210 during an erasing operation.

In some embodiments, detecting and/or tracking a contact condition may comprise determining a contact pressure between the eraser device 100 and the interaction surface 210. More specifically, the contact pressure may be the pressure exerted by the eraser device 100 on the interaction surface 210 during an erasing operation by a user U. In other words, during an erasing operation, the user may apply a force on the eraser device 100 which may result in contact pressure between the eraser device 100 and the interaction surface. The contact pressure can be determined without providing pressure sensing elements like a pressure sensor or pressure sensing matrix. This may lead to reduced costs of the system 10. Determining the contact pressure may be based on the determined position and/or orientation of the eraser device 100 relative to the interaction surface 210 and the eraser device information. Furthermore, determining the contact pressure may be based on the interaction surface information as described above.

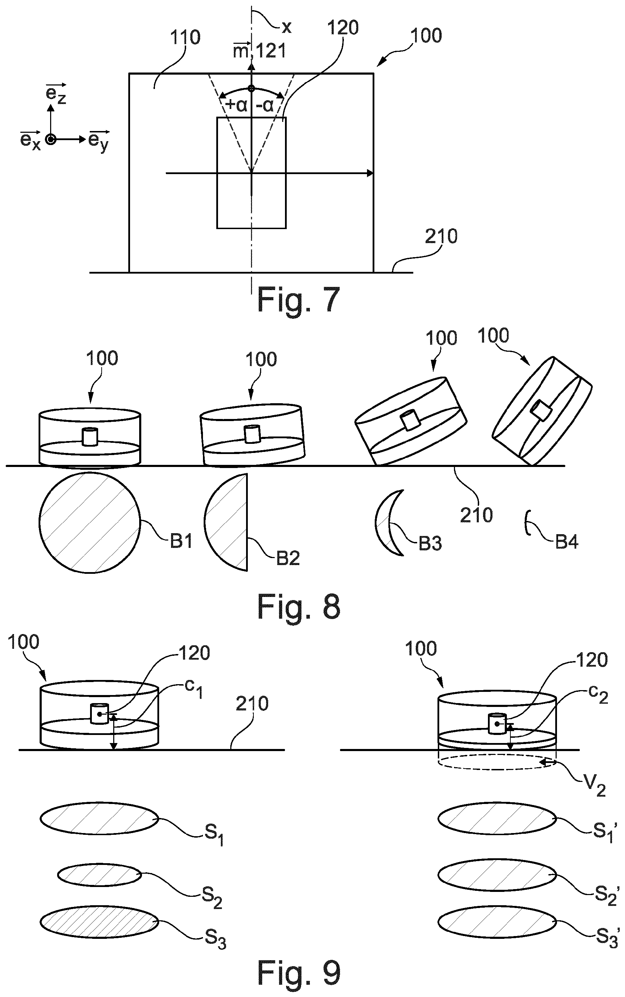

Determining a contact shape and/or contact area may comprise determining a virtual volume of the eraser device 100 based on the eraser device geometry information. Determining a contact shape and/or contact area may further comprise determining a virtual interaction surface based on the interaction surface information, and determining a virtual intersection V1, V2 of the virtual volume, or at least a portion thereof, of the eraser device 100 and the virtual interaction surface based on the magnetic body arrangement information and determined eraser device location. Determining the contact shape and/or contact area may be based on the virtual intersection V1, V2 and eraser device information. Fig. 6B and Fig. 9 on the upper right illustrate examples, wherein the eraser portion 112 is at least partially compressed due to pressure applied between the eraser device 100 and interaction surface 210 during an erasing operation. Based on the eraser device location, more specifically the magnetic body location relative to the interaction surface 210, and eraser device information including information regarding the eraser portion 112 and erasing surface 113, the virtual intersection V1, V2 of the virtual volume of the eraser device 100 and the virtual interaction surface may be determined. Based on the determined intersection of at least a portion of the virtual volume with the virtual interaction surface, the contact shape and/or area may be determined.

Determining a contact pressure may be further based on the determined contact shape and/or contact area. In more detail, determining the contact pressure may be based on the determined virtual intersection. Determining a contact pressure may comprise defining the contact pressure by accessing a database comprising a predefined data list which correlates contact shape and/or contact area data with contact pressure data. The contact pressure may be expressed as a function of the distance and orientation of the magnetic body 120 to the interaction surface 210 during operation. In an example, a certain position and/or orientation of the eraser device 100 relative to the interaction surface 210 may indicate that part of the eraser portion 112 of the eraser device 100 is compressed. Data associating certain locations of the eraser device 100 with compression states of the erasing portion 112 and corresponding pressure applied may be accessible in a database. This data may be available for different eraser device information. E.g., a data table or look-up table may be implemented including different eraser device information for different types of eraser devices.

Figs. 3A to 3C and 4A to 4D illustrate some examples of a contact condition A between the eraser device 100 comprising substantially the cuboid shape. In Fig. 3A, the eraser device 100 is distanced to the interaction surface 210. The erasing surface 113 (more specifically the bottom surface) may have a substantially rectangular shape and is substantially parallel to the interaction surface 210. In case the eraser device 100 would contact the interaction surface 210, the resulting contact condition A would comprise a rectangular contact shape and a rectangular contact area. In Fig. 3B, the eraser device 100 contacts the interaction surface with the front edge and the resulting contact condition A comprises a contact shape and/or contact area in form of a straight line. In Figs. 3C and 4A, only a corner of the eraser device 100 may be in contact with the interaction surface 210. The resulting contact condition A may be in the form of a point or circle. In Fig. 4B, the front edge may comprise a curved shape such that the resulting contact condition A may comprise a contact shape and/or contact area in form of a curved line. In Fig. 4C different contact conditions A1-A5 for an eraser device contact with the interaction surface 210 are illustrated. In contact condition A1, an eraser edge having a curved shape may be in contact with the interaction surface 210, at least some pressure may be applied so that the eraser portion 112 is compressed and a portion of the bottom surface may also in contact with the interaction surface 210. The resulting contact condition A1 may comprise a circular sector-shaped contact area and the contact shape may be curved on one side and substantially straight on an opposite side. In contact condition A2, a curved edge portion of the eraser device 100 may be in contact with the interaction surface 210 and some pressure may be applied. The resulting contact condition A2 may comprise an ellipsoidal contact shape and/or contact area. In comparison to contact conditions A1 and A2, in contact condition A5 only a curved edge portion may be in contact with the interaction surface 210, without pressure or only little pressure applied. The resulting contact condition may include a contact shape in form of a straight line. In contact condition A3, an edge portion (e.g., the front edge) may be in contact with the interaction surface 210 and some pressure may be applied. The resulting contact condition A3 may comprise a rectangular contact shape and contact area. In contact condition A4, an edge portion (e.g., the front edge) may be in contact with the interaction surface 210 but without or lower pressure applied than in contact condition A3. The resulting contact condition A4 may comprise a straight line.

Fig. 4D illustrates different examples of a contact condition A6-A8 of the eraser device 100 with the interaction surface in form of a flat surface contact. In other words, the eraser device 100 may lie "flat" on the interaction surface 210 on its bottom surface and the associated contact condition may comprise a contact shape and/or contact area in the form of the bottom surface. In the example of contact condition A6, the eraser device may comprise a rectangular bottom surface. In the example of contact condition A7, the eraser device may comprise a rectangular bottom surface with rounded edges. In the example of contact condition A8, the eraser device may comprise a parallelepiped bottom surface.

Figs. 8 and 10 illustrate some examples of a contact condition B between the eraser device 100 comprising substantially the cylindrical shape as described above. Fig. 8 on the left illustrates a contact condition B1, wherein the entire bottom surface of the eraser device 100 has a flat surface contact with the interaction surface 210. In this case, the contact condition B1 may comprise a curved contact shape and circular contact area. In Fig. 8 mid-left, a contact condition B2 is illustrated, in which the eraser device is slightly tilted relative to the interaction surface 210 and some pressure may be applied so that an edge portion and a portion of the bottom surface is in contact with the interaction surface 210. The associated contact condition B2 may comprise a contact shape and/or contact area which may be semicircular or circular sector-shaped. In the contact condition B3 as illustrated in Fig. 8 mid-right, the eraser device 100 is further tilted relative to the interaction surface and at least some pressure may be applied, so that an edge portion of the eraser device 100 may be in contact with the interaction surface 210. The associated contact condition B3 may comprise a contact shape and/or contact area in the form of a crescent. If the eraser device 100 is further tilted to the interaction surface 210 and some pressure released in comparison to contact condition B3, only an edge portion of the eraser device 100 may be in contact with the interaction surface 210 (see, Fig. 8 on the right). The associated contact condition B4 may comprise a contact shape and/or area in the form of a curved line. Fig. 10 illustrates some additional examples of contact conditions B5 to B8, wherein the influence of pressure applied between the eraser device 100 and the interaction surface 210 is described in more detail. In Fig. 10 on the left, an edge portion of the eraser device 100 may be in contact with the interaction surface 210 with low pressure applied. The associated contact condition B5, B7 may comprise a contact area in the form of a crescent (see, B5) and an associated contact shape (see, B7) in the form of a circular sector-shaped line. In Fig. 10 on the right, larger pressure is applied between the eraser device 100 and the interaction surface 210 so that a portion of the bottom surface (in this case, half the circular bottom surface) comes into contact with the interaction surface 210. The contact condition B6, B8 may comprise a contact area in the form of a semicircle (see, B6) and an associated contact shape (see, B8) in the form of a semicircular line.

In the following, examples for the 3D computation of a contact condition, more specifically an eraser edge contact with the interaction surface 210, are described in more detail. As described above, in Figs. 3D and 3E, the eraser device 100 may substantially comprise a cuboid shape and an example for the detection and/or tracking a contact condition is illustrated. As shown in Fig. 3E, the eraser device 100 may comprise an edge contact, particularly a front edge contact, with the interaction surface 210, As shown, the eraser portion 112 is not (yet) compressed. Based on eraser device information including magnetic body arrangement information and eraser device geometry information, the position and orientation of the magnetic body 120 relative to the eraser device 100, more specifically to all locations of the erasing surface 113, may be known. Eraser device geometry information may include the length L, height h and width w of the eraser device. Furthermore, based on eraser device geometry information and magnetic body arrangement information, the arrangement of the magnetic body 120 relative to the eraser portion 112, more specifically to the eraser surface 113 may be known. Furthermore, the magnetic body location, including position and orientation, of the eraser device 100 relative to the interaction surface 210 may be known based on the magnetic field measurements with the plurality of magnetometers 300 and interaction surface information. In more detail, the location (including position and orientation) of the magnetic body 120 relative to a point P on the interaction surface 210 may be known, which may be defined by an intersection of a normal n on the interaction surface 210 and extending through position O. As mentioned above, the magnetic body 120 may be modeled as a magnetic dipole being defined by the magnetic moment vector 121, *̅m̅*̅ and/or the position vector. Thereby, position O (e.g., which may be a center of the magnetic body 120) from which the magnetic moment vector 121, *̅m̅*̅ extends may be known. The interaction surface 210 may comprise a reference coordinate system with coordinate vectors *e̅ₓ̅, e̅_̅{̅y̅}̅, e̅_̅{̅z̅}̅*. Vertical axis *̅e̅_̅{̅z̅}̅*̅ may be defined perpendicular to the interaction surface 210.

A contact condition in form of an eraser edge contact (here described may be determined with respect to the normal n on the interaction surface extending through point P and center O. The contact condition of the eraser device 100 with the interaction surface may be computed as follows. A vector *̅O̅E̅*̅ between the center O of the magnetic body 120 and the eraser edge E can be defined by *O̅E̅ = O̅M̅ + O̅F̅.* The expression *̅O̅M̅*̅ may be defined by *̅O̅M̅*̅ = ∥*̅O̅M̅*̅∥ *̅m̅*̅, wherein m is the normalized magnetic moment vector 121. Point M may be defined as the intersection point of the magnetic moment vector *̅m̅*̅ with the outer surface of the eraser body 100. An orthogonal vector *̅o̅r̅t̅h̅o̅*̅ may be defined at this point as $\vec{ortho} = \frac{\vec{{e}_{z}} x \vec{m}}{\left‖\vec{{e}_{z}} x \vec{m}\right‖} ,$ and the vector *̅e̅_̅{̅z̅}̅*̅ may be replaced by $\frac{\vec{OF}}{\left‖\vec{OF}\right‖} = \frac{\vec{ortho} x \vec{m}}{\left‖\vec{ortho}x\vec{m}\right‖} .$

The expression "x" refers to the cross-product between the respective terms. Point F may be defined as the intersection point of vector *̅O̅F̅*̅ with the erasing surface 113, which may be orthogonal to the magnetic moment vector m. Vector *̅O̅F̅*̅ may be defined as $\vec{OF} = h 1 \left(\frac{\vec{ortho} x \vec{m}}{\left‖\vec{ortho}x\vec{m}\right‖}\right) ,$ wherein h1 is the distance between point F on the erasing surface 113 and center O. In the example of Figs. 3D and 3E, a distance between center O and point M may be $\left‖\vec{OM}\right‖ = \frac{L}{2} .$

As a consequence, vector *̅O̅E̅*̅ between the center O of the magnetic body 120 and the eraser edge E can be determined as follows: $\vec{OE} = \left(+/-\right) \frac{L}{2} \vec{m} + h 1 \left(\frac{\vec{ortho} x \vec{m}}{\left‖\vec{ortho}x\vec{m}\right‖}\right) .$

In this example, the component *̅e̅_̅{̅z̅}̅*̅ of magnetic moment vector *̅m̅*̅ is less than zero, so that the sign of the first expression of the above equation is positive. If the *̅e̅_̅{̅z̅}̅*̅ component of vector m is greater than zero, the sign of the first expression of the above equation is negative.

In the embodiment of Figs. 6A to 6C, and as described above, the eraser device 100 may substantially comprise the cylindrical shape and the magnetic body longitudinal axis m may extend coaxial to the longitudinal axis x. Again, as shown in Fig. 6C, the eraser portion 112 may not (yet) be compressed. Based on eraser device information including magnetic body arrangement information and eraser device geometry information, the position and orientation of the magnetic body 120 relative to the eraser device 100 may be known. Eraser device geometry information may include the diameter D and height h of the eraser device. Furthermore, based on eraser device geometry information and magnetic body arrangement information, the arrangement of the magnetic body 120 relative to the eraser portion 112, more specifically to the eraser surface 113 may be known. Furthermore, the magnetic body location, including position and orientation, of the eraser device 100 relative to the interaction surface 210 may be known based on the magnetic field measurements with the plurality of magnetometers 300 and interaction surface information. In more detail, the location (including position and orientation) of the magnetic body 120 relative to a point P on the interaction surface 210 may be known, which may be defined by an intersection of normal n on the interaction surface 210 and extending through position O. In this case, depending on the magnetic moment vector m and/or the position vector including position O, vector *̅O̅E̅*̅ between the center O of the magnetic body 120 and the eraser edge E can be determined as follows. A plane *O*, *e̅_̅{̅z̅}̅, m̅* may be defined. A vector *̅O̅E̅*̅ between the center O of the magnetic body 120 and the eraser edge E can be defined by *O̅E̅ = O̅M̅ + O̅F̅.* The expression *̅O̅M̅*̅ may be defined by *̅O̅M̅*̅ = ∥*̅O̅M̅*̅∥*̅m̅*̅, wherein *̅m̅*̅ is the normalized magnetic moment vector 121. Point M may be defined by an intersection of a vector extending through point O, and being perpendicular to the magnetic moment vector *̅m̅*̅, with the outer surface of the eraser body 100. This vector and the magnetic moment vector *̅m̅*̅ lie within plane *O*, *e̅_̅{̅z̅}̅, m̅*. An orthogonal vector *̅o̅r̅t̅h̅o̅*̅ may be defined at this point M as $\vec{ortho} = \frac{\vec{{e}_{z}} x \vec{m}}{\left‖\vec{{e}_{z}} x \vec{m}\right‖} ,$ and the vector *̅e̅_̅{̅z̅}̅*̅ may be replaced by $\frac{\vec{OM}}{\left‖\vec{OM}\right‖} = \frac{\vec{ortho} x \vec{m}}{\left‖\vec{ortho}x\vec{m}\right‖} .$

The vector *̅O̅M̅*̅ between point O and point M can be defined as $\vec{OM} = \frac{D}{2} \left(\frac{\vec{ortho} x \vec{m}}{\left‖\vec{ortho}x\vec{m}\right‖}\right) ,$ wherein D is the diameter of the eraser device 100. As described above, in this case, the magnetic body 120 may be arranged within the eraser body 110 such that the magnetic body longitudinal axis and magnetic moment vector 121 are arranged coaxial with longitudinal axis x. As a consequence, a distance between points O and M may be D/2.

Point F may be defined as the intersection point of the magnetic moment vector *̅m̅*̅ with the erasing surface 113. Vector *̅O̅F̅*̅ may be defined as $\vec{OF} = h 2 \vec{m} ,$ wherein h2 is the distance between point F on the erasing surface 113 and center O. Vector *̅O̅E̅*̅ between the center O of the magnetic body 120 and the eraser edge E can be determined as follows: $\vec{OE} = \left(+/-\right) h 2 \vec{m} + \frac{D}{2} \left(\frac{\vec{ortho} x \vec{m}}{\left‖\vec{ortho}x\vec{m}\right‖}\right) .$

In this example, the component *̅e̅_̅{̅z̅}̅*̅ of magnetic moment vector *̅m̅*̅ is less than zero, so that the sign of the first expression of the above equation is positive. If the *̅e̅_̅{̅z̅}̅*̅ component of magnetic moment vector *̅m̅*̅ is greater than zero, the sign of the first expression of the above equation is negative. It should be noted that a distance between any point of the shape of the magnetic body 120 and a point on the erasing surface 130 may be determined based on the principles and associated parameters as described above.

Referring to Figs. 5 and 7, and as described above, the magnetic body 120 defines the magnetic moment vector 121 which has a fixed orientation to the eraser surface 113 of the eraser device 100. Detecting and/or tracking a contact condition between the eraser device 100 and the interaction surface 210 may comprise defining the contact condition as a flat surface contact between the eraser surface and the interaction surface 210 when an angle α between the magnetic moment vector 121 and the interaction surface 210 is below a threshold value. Detecting and/or tracking a contact condition between the eraser device 100 and the interaction surface 210 may comprise defining the contact condition as a partial surface contact or edge contact when the angle α between the magnetic moment vector 121 and the interaction surface 210 is above the threshold value. In examples, the angle α may be in the range of from 0° to 90°. The threshold value may be from 3° to 8°, more specifically from 4° to 7°. Determining a contact shape and/or a contact area between the eraser device 100 and the interaction surface 210 is based on the defined flat surface contact, or, the defined partial surface contact or edge contact. In other words, in case the surface contact is defined as the flat surface contact, the contact condition may comprise substantially a contact shape and/or contact area in the form of the bottom surface. As described above, the interaction surface 210 may comprise a curved shape. In this case, the contact condition (i.e., either flat surface contact or partial contact or edge contact) may be defined with regard to the normal n and point P of the interaction surface 210 as described above.

Referring to Fig. 1, and as already mentioned regarding the system 10, the method 600 may further comprise controlling a virtual reproduction 660 of the eraser device 100 and/or of the erasing operation on the interaction surface 210 by a user based on the determined and/or tracked erasing operation. The following may apply for all embodiments of the eraser device 100 disclosed herein. More specifically, the erasing operation, the eraser device and the determined contact condition (including contact pressure, contact shape and/or a contact area) may be implemented in the virtual environment and the virtual reproduction may be controlled accordingly. E.g., the contact shape and/or contact area may be implemented as a virtual contact shape and/or virtual contact area. Controlling the virtual reproduction may comprise adapting and/or selecting at least one setting of the virtual reproduction based on one or more of the detected and/or tracked contact condition, eraser device information and interaction surface information. The setting may be a digital setting. The setting of the virtual reproduction may be an erasing grade (e.g., transparency, partial or complete erasing), an erasing size and/or an erasing texture. The adapted and/or selected at least one setting may be dependent on the determined contact pressure. Figs. 9 to 12 illustrate various examples, how digital settings of the virtual reproduction can be adapted and/or selected. In Fig. 9 on the left, the eraser device 100 has a contact condition wherein the bottom surface is in contact with the interaction surface 210 (i.e., a flat contact condition). A distance between the magnetic body 110 to the interaction surface may be c1 and only low pressure may be applied. S1 is the setting "erasing grade", S2 is the setting "erasing size" and S3 is the setting "erasing texture". In comparison, in Fig. 9 on the right, the same eraser device 100 is illustrated but a larger pressure may be applied so that the eraser portion 112 may be more compressed, resulting in a distance c2 smaller than c1. Setting S1 may change to setting S1' due to the larger pressure applied. The erasing size may change from transparent or partial erasing (setting S1) to complete erasing (setting S1'). Setting S2 may change to setting S2' due to the larger pressure applied. The erasing size may change from a smaller erasing size to a larger erasing size (setting S2'). Setting S3 may change to setting S3' due to the larger pressure applied. The erasing texture may change from a first texture (setting S3) to a second texture (setting S3'). In Fig. 10 on the left, a low pressure may be applied (see, distance c1 between magnetic body 100 and interaction surface 210) while on the left, larger pressure may be applied. Accordingly, the eraser portion 112 may be at least partially compressed and a distance c2 may be smaller than distance c1. Based on the pressure applied, the virtual reproduction may be adapted accordingly. In this example, the virtual contact condition (including the virtual contact area and/or contact shape) may change from the crescent shape and curved line on the left to the semicircular shape and curved line on the right.

As mentioned above, the setting and virtual reproduction may be further based on the eraser device information. Eraser device information may include eraser device characteristics information comprising a thickness and/or a material of the eraser portion 112. In examples, the setting "erasing texture" may be dependent on the material as defined above. Under lower pressure applied, the setting may comprise a first erasing texture T1-T4, wherein each of T1, T2, T3, T4 illustrates a different material having a first erasing texture. Under larger pressure applied, the first erasing texture T1-T4 may change to a second erasing texture T1'-T4', wherein each of T1', T2', T3', T4' illustrates a different material having the second erasing texture.

Referring to Fig. 12, and as already described above, the eraser portion 112 may be configured such that the eraser surface 113 comprises a rounded, flat and/or wavy shape. Eraser device geometry information comprises information of one or more of an eraser device shape and an erasing surface shape. The setting of the virtual reproduction may be further based on the information relating to the eraser device shape and/or erasing surface shape, which may be dependent on the pressure applied. In Fig. 12 on the top, the erasing surface 113 of the eraser device 100 may comprise a rounded shape. The setting may include a first erasing size and/or erasing grade (see, G1) under low pressure applied which may change to a second erasing size and/or erasing grade (see, G1') under larger pressure applied. In Fig. 12 in the middle, the erasing surface 113 of the eraser device 100 may comprise a rounded shape. The setting may include a first erasing grade (see, G2) under low pressure applied which may change to a second erasing grade (see, G2') under larger pressure applied. In Fig. 12 on the bottom, the erasing surface 113 of the eraser device 100 may comprise a wavy shape. The setting may include a first erasing texture and/or erasing grade (see, G3) under low pressure applied which may change to a second erasing texture and/or erasing grade (see, G3') under larger pressure applied.

In the following the capturing of eraser device information will be described in more detail. In an embodiment, the eraser device 100 may comprise at least one RFID tag attached to or embedded therein. The at least one RFID tag may comprise the described eraser device information. The system 10 and/or tracking system may comprise at least one RFID reader configured to read the eraser device information included as digital data in the respective RFID tag. The RFID reader may trigger the RFID tag to transmit eraser device information which may be used by the methods and systems as described herein. The RFID reader may be communicatively coupled with the processing unit 40. Additionally or alternatively, the following for capturing eraser device information may be provided. As described above, the eraser device 100 comprising the magnetic body 120 may comprise a magnetic signature. Referring to Fig. 1, obtaining eraser device information 610 may comprise detecting the magnetic signature of the magnetic body 120 based on the obtained magnetic field measurements. Obtaining eraser device information 610 may comprise determining an eraser device type based on the detected magnetic signature, accessing a database comprising a predefined data list which correlates eraser device information with the eraser device type, and retrieving eraser device information of the predefined data list based on a match of the eraser device type and the detected magnetic signature. In examples, a look-up table may be implemented. In examples, the predefined data list may comprise different types of eraser devices 100 (e.g., having different configurations of magnetic bodies, applications and/or features) and/or their respective eraser device information associated with respective magnetic signatures. In an example, the eraser device may comprising the magnetic body 120 (and in some embodiments at least one second magnetic body) may define an individual magnetic signature which may be linked to a specific type of eraser device and/or corresponding eraser device information. For example, the magnetic field strength may be linked to the type of eraser device 100 and the magnetic field shape may be linked to specific eraser device information. Based on the magnetic signature, the associated eraser device information can be identified. Eraser device information may then be used for adapting and/or selecting the at least one setting of the virtual reproduction. Consequently, the resulting effect on the virtual reproduction of the eraser device 100 operated on a "virtual" interaction surface (e.g., the interaction surface 210 being implemented as a virtual interaction surface) may be dependent on the eraser device information. In some examples, at least two eraser devices 100 may be operated within the sensing volume M. Each of the eraser devices 100 may comprise an individual magnetic signature which may be indicative of individual eraser device information. The location determination, detection and/or tracking, control, and/or representation of a virtual reproduction of the individual eraser devices 100 may be based on the individual magnetic signature and associated individual eraser device information. A first eraser device may comprise the magnetic body 120. At least one second eraser device may comprise at least one second magnetic body. The magnetic body 120 may be configured to define a first magnetic signature and the at least one second magnetic body may be configured to define a second magnetic signature, the first magnetic signature being different from the second magnetic signature. The method described may identify eraser device information based on the first magnetic signature. The method 600 described may identify second eraser device information based on the second magnetic signature. Accordingly, the virtual representation based on the first eraser device information may be different from the virtual representation based on the second eraser device information.

**In** embodiments, the method 600 may comprise controlling the virtual reproduction based on the determined and/or tracked location of the eraser device 100. The method 600 may further comprise representing 670 the controlled virtual reproduction on the at least one output device 500. The representation and/or movement of the virtual reproduction on the at least one output device 50 may be based on the determined and/or tracked erasing operation on the interaction surface (210). The representation and/or movement of the virtual reproduction may be based on the interaction surface information, determined and/or tracked location of the eraser device 100 relative to the interaction surface 210, and the determined contact condition including contact pressure, contact area and/or contact shape. The method 600 described may be a computer-implemented method. The system 10 described herein may be configured to execute the computer-implemented method.

The method steps may be carried out simultaneously or in a different order, e.g., obtaining eraser device information, magnetic field measurements and obtaining interaction surface information may be in a random order. Determining the location of the eraser device 100 may be provided over time as described above, i.e., tracking of the location may be provided. In some embodiments, an erasing operation may be performed by a user on the interaction surface 210 with high velocity. The method 600 may apply, e.g., for representation and/or movement of the virtual reproduction of the eraser device 100 on the interaction surface 210, an interpolation step. Thereby, visual inconsistencies generated by the different operating frequencies of the eraser device 100 and the system 10 may be minimized. Additionally, or alternatively, the method 600 may apply the interpolation step in order to reduce computation and a required sampling rate of magnetic field measurements, which may be used for detecting and/or tracking the erasing operation. The interpolation step may be applied for detection and/or tracking the erasing operation, e.g., when generating an erasing trajectory (over multiple time samples) in the virtual environment, thereby providing correct and accurate erasing behaviour in the virtual environment. In examples, a linear, cubic, spline or Bezier curve interpolation may be used. As mentioned above, the eraser device 100 may be detected and/or tracked, e.g., over a time period comprising multiple time samples. At each time sample, the method 600 may comprise detecting and/or tracking the erasing operation, as well as determination the location of the eraser device 100. The amount of samples may be reduced when using the interpolation. The interpolation step can be used in particular when the eraser device 100 is operated at high speed on the interaction surface 210 by a user.

In embodiments, the method may further comprise applying a filter for filtering the determined eraser device location, magnetic body location and/or the detected and/or tracked erasing operation. Magnetic and electronic noise, as well as environmental variations may lead to non-smooth determinations over time. Based on the filtering, a smooth location trajectory of the magnetic body 120 may be achieved. For filtering, optimization algorithms or recursive Bayesian estimation such as a Kalman filter may be applied, more specifically an extended Kalman filter or an unscented Kalman filter. In some embodiments, the Kalman filter (e.g., an extended Kalman filter for a nonlinear measurement system) may be applied for evaluating the position and/or orientation of the magnetic body 120 based on the magnetic field measurements. In some embodiments, a low-pass filter may be used in combination with a Kalman filter. As already mentioned, the magnetic body 120 may be tracked over a time period comprising multiple time samples. At each time sample, the method may comprise determining the magnetic body location, eraser device location and/or detecting and/or tracking the erasing operation. The method 600 may further comprise storing the determined and/or detected features for each time sample. Furthermore, the method 600 may be configured to take into account (more specifically to remove) external magnetic fields, e.g. the earth magnetic field. As mentioned above, the method 600 may be a computer-implemented method. In some embodiments, the processing unit(s) 400 of or coupled with the system 10 may be configured to execute the computer-implemented method. A computer system may be configured to execute the computer-implemented method as described above. A computer program may be configured to execute the computer-implemented method as described above. Furthermore, a computer-readable medium or signal storing the computer program may be provided. The above-described computer-implemented method 600 can comprise or be executable via a computer or a network of computers, the computer or network of computers comprising at least one processing unit (e.g., a processor, and/or the processing unit(s) 40 as described above) and at least one data storage (i.e., memory). The procedural logic described may be held in the form of executable code in at least one data storage and executed by the at least one processing unit. In examples, the computer-implemented method may be executed on an embedded system comprising at least one microprocessor such as a microcontroller (MCU) or a digital signal processing (DSP) processor. In some embodiments, the computer-implemented method may be executed on a computer, a tablet, a smartphone, a smart TV or an interactive display. The system 10 may send data to the at least one processing unit and, in examples, they may also receive instructions from the at least one processing unit. The processing unit may thereby direct user-initiated and/or automatically generated queries to the system 10. The system 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. The system 10 may comprise at least one database. Alternatively, or in addition, the system 10 may access a database in a cloud (via a communication interface). The system 10 may comprise at least one communication interface to couple the processing unit(s) 400 and/or the database. The communication interface may comprise one or more of a network, internet, a local area network, a wireless local area network, a broadband cellular network, and/or a wired network. In examples, the system 1 may couple to one or more features via a server hosted in a cloud. The processing unit(s) 400 mentioned above may be communicatively coupled with other processing units external to the system 10.

Although the above principles have been described for the system 10 and eraser device 100, and eraser devices 100 or further devices like writing and/or drawing instruments including a magnetic body may be provided. In an example, the system 10 may comprise a plurality of eraser devices 10 and/or writing instruments operated (e.g., manipulated by a user U) within the sensing volume M created by the magnetometer(s). Although the above principles have been described for a magnetic body 120 of the eraser device 100, the at least one second magnetic body 125 or at least one additional magnetic body may be provided and the above principles may also apply to these additional magnetic bodies.

Although the present invention has been described above and is defined in the attached claims, it should be understood that the invention may alternatively be defined in accordance with the following embodiments:
1. A method (600) for erasing detection and/or tracking, the method (600) comprising:
   a) obtaining eraser device information (610) related to an eraser device (100) comprising an eraser body (110) and a magnetic body (120) connected to the eraser body (110), the eraser device (100) being configured for an erasing operation on an interaction surface (210),
   b) obtaining magnetic field measurements (620) associated with the magnetic body (120) and measured with a plurality of magnetometers (300),
   c) obtaining interaction surface information (630),
   d) determining a location (640) of the eraser device (100) based on the magnetic field measurements,
   e) detecting and/or tracking an erasing operation (650) of the eraser device (100) on the interaction surface (210) based on the eraser device information, the interaction surface information and the determined eraser device location.
2. The method (600) according to embodiment 1, wherein detecting and/or tracking the erasing operation (650) comprises:
   detecting and/or tracking a contact condition between the eraser device (100) and the interaction surface (210).
3. The method (600) according to embodiment 2, wherein detecting and/or tracking a contact condition comprises:
   determining a contact shape and/or a contact area between the eraser device (100) and the interaction surface (210).
4. The method (600) according to embodiment 2 or embodiment 3, wherein detecting and/or tracking a contact condition comprises determining a contact pressure between the eraser device (100) and the interaction surface (210), more specifically wherein the contact pressure is the pressure exerted by the eraser device (100) on the interaction surface (210).
5. The method (600) according to any one of the preceding embodiments, wherein the determined location of the eraser device comprises a position and/or orientation of the eraser device (100),
   wherein detecting and/or tracking an erasing operation (650) comprises determining a position and/or orientation of the eraser device (100) relative to the interaction surface (210).
6. The method (600) according to embodiment 5, when dependent on embodiment 3, wherein determining a contact shape and/or contact area is based on the determined position and/or orientation of the eraser device relative to the interaction surface and based on the eraser device information.
7. The method (600) according to embodiment 5 or embodiment 6, when dependent on embodiment 4, wherein determining a contact pressure is based on the determined position and/or orientation of the eraser device relative to the interaction surface and the eraser device information.
8. The method according to embodiment 7, wherein determining a contact pressure is further based on the determined contact shape and/or contact area, and wherein determining a contact pressure comprises:
   defining the contact pressure by accessing a database comprising a predefined data list which correlates contact shape and/or contact area data with contact pressure data.
9. The method (600) according to any one of the preceding embodiments, further comprising:
   controlling a virtual reproduction (660) of the eraser device (100) and/or of the erasing operation based on the determined and/or tracked erasing operation.
10. The method (600) according to embodiment 9, when dependent on embodiment 2, wherein controlling the virtual reproduction (660) comprises:
   adapting and/or selecting at least one setting of the virtual reproduction based on one or more of the detected and/or tracked contact condition, eraser device information and interaction surface information.
11. The method (600) according to embodiment 9 or embodiment 10, further comprising:
   representing (670) the controlled virtual reproduction on at least one output device (500), more specifically wherein the representation and/or movement of the virtual reproduction on the at least one output device (500) is based on the determined and/or tracked erasing operation on the interaction surface (210).
12. The method (600) according to any one of the preceding embodiments, wherein eraser device information comprises one or more of:
   eraser device geometry information,
   eraser device characteristics information, and
   magnetic body arrangement information.
13. The method according to embodiment 12, when dependent on embodiment 6, wherein determining a contact shape and/or contact area comprises:
   determining a virtual volume of the eraser device (100) based on the eraser device geometry information,
   determining a virtual interaction surface based on the interaction surface information,
   determining a virtual intersection of the virtual volume of the eraser device (100) and the virtual interaction surface based on the magnetic body arrangement information and determined eraser device location, and
   determining the contact shape and/or contact area based on the virtual intersection and eraser device characteristics information.
14. The method (600) according to embodiment 12 or embodiment 13, wherein eraser device geometry information comprises information of one or more of an eraser device shape and an erasing surface shape.
15. The method (600) according to any one of embodiments 12 to 14, wherein the eraser body (110) comprises a main body portion (111) and an eraser portion (112), wherein eraser device characteristics information comprises one or more of a thickness and a material of the eraser portion (112).
16. The method (600) according to any one of embodiments 12 to 15, wherein magnetic body arrangement information comprises a position and/or an orientation of the magnetic body (120) relative to the eraser body (110).
17. The method (600) according to any one of the preceding embodiments, wherein interaction surface information comprises one or more of a location of the interaction surface (210) relative to the plurality of magnetometers (300) and interaction surface characteristic information.
18. The method (600) according to any one of the preceding embodiments, wherein an interaction support (200) comprises the interaction surface (210), wherein the plurality of magnetometers (300) is immovably connected to the interaction support (200), more specifically wherein the interaction support (200) is a whiteboard.
19. The method (600) according to any one of the preceding embodiments, wherein the eraser device (100) is electrically and/or electronically passive.
20. The method (600) according to any one of the preceding embodiments, wherein the magnetic body (120) is a permanent magnet.
21. The method (600) according to any one of the preceding embodiments, wherein the magnetic body (120) is a first magnetic body and wherein the eraser device (100) comprises at least one second magnetic body (125) connected to the eraser body (110) at a non-zero distance to the first magnetic body, wherein the method (600) comprises:
   obtaining magnetic field measurements (620) associated with the first magnetic body (120) and the at least one second magnetic body (125) measured with the plurality of magnetometers (300), and
   determining the location (640) of the eraser device (100) based on the magnetic field measurements of the first magnetic body (120) and the at least one second magnetic body (125).
22. The method (600) according to any one of embodiments 2 to 21, wherein the magnetic body (120) is configured to generate a magnetic field and wherein the magnetic body (120) defines a magnetic moment vector (121) that has a fixed orientation to an eraser surface (113) of the eraser device (100), wherein detecting and/or tracking a contact condition between the eraser device (100) and the interaction surface (210) comprises:
   defining the contact condition as a flat surface contact between the eraser surface and the interaction surface (210) when an angle (α) between the magnetic moment vector (121) and the interaction surface (210) is below a threshold value, and
   defining the contact condition as a partial surface contact or edge contact when the angle (α) between the magnetic moment vector (121) and the interaction surface (210) is above the threshold value.
23. The method (600) according to embodiment 21, when dependent on embodiment 3, wherein determining a contact shape and/or a contact area between the eraser device (100) and the interaction surface (210) is based on the defined flat surface contact, or, the defined partial surface contact or edge contact.
24. The method (600) according to any one of the preceding embodiments, wherein obtaining eraser device information (610) comprises:
   detecting a magnetic signature of the magnetic body (120) based on the obtained magnetic field measurements,
   determining an eraser device type based on the detected magnetic signature,
   accessing a database comprising a predefined data list which correlates eraser device information with the eraser device type, and
   retrieving eraser device information of the predefined data list based on a match of the eraser device type and the detected magnetic signature.
25. The method (600) according to any one of the preceding embodiments, wherein the method (600) is a computer-implemented method.
26. A computer system configured to execute the computer-implemented method according to embodiment 25.
27. A computer program configured to execute the computer-implemented method according to embodiment 25.
28. A computer-readable medium or signal storing the computer program of embodiment 27.
29. An eraser device (100), comprising:
   an eraser body (110) comprising a longitudinal axis (x) and an eraser surface (113), and a magnetic body (120) connected to the eraser body (110),
   wherein the magnetic body (120) is configured to generate a magnetic field and defines a magnetic moment vector (121),
   wherein the eraser device (100) comprises a cuboid shape having the longitudinal axis (x) and wherein the magnetic body (120) is connected to the eraser body (110) such that the magnetic moment vector (121) extends substantially parallel to the eraser surface (113) and/or the longitudinal axis (x), or,
   wherein the eraser device (100) comprises a cylindrical shape having the longitudinal axis (x) and wherein the magnetic body (120) is connected to the eraser body (110) such that the magnetic moment vector (121) extends substantially perpendicular to the eraser surface (113) and substantially parallel to the longitudinal axis (x).
30. The eraser device (100) according to embodiment 29, wherein the eraser device (100) is configured for an erasing operation on an interaction surface (210) with the eraser surface (113).
31. The eraser device (100) according to embodiment 29 or embodiment 30, wherein the eraser body (110) comprises a main body portion (111) and an eraser portion (112) connected to the main body portion (111), wherein the eraser portion (112) defines the eraser surface (113).
32. The eraser device (100) according to embodiment 31, wherein the eraser portion (112) comprises a compressible and/or flexible material.
33. The eraser device (100) according to embodiment 32, wherein the compressible and/or flexible material is a sponge material, a felt material or a textile material.
34. The eraser device (100) according to any one of embodiments 29 to 33, wherein the eraser portion (112) is configured such that the eraser surface (113) comprises a rounded, flat or wavy shape.
35. The eraser device (100) according to any one of embodiments 31 to 34, wherein the magnetic body (120) is fixedly connected or removably connected to the eraser body (110), more specifically to the main body portion (111).
36. The eraser device (100) according to any one of embodiments 29 to 35, wherein the eraser portion (112) is removably connected to the main body portion (111).
37. The eraser device (100) according to any one of embodiments 29 to 36, wherein the eraser device (100) is electrically and/or electronically passive.
38. The eraser device (100) according to any one of embodiments 29 to 37, wherein the magnetic body (120) is a permanent magnet.
39. The eraser device (100) according to any one of embodiments 29 to 38, wherein the magnetic body (120) is a first magnetic body and the magnetic moment vector (121) is a first magnetic moment vector,
   wherein the eraser device (100) comprises at least one second magnetic body (125) connected to the eraser body (110) at a non-zero distance to the first magnetic body,
   wherein the second magnetic body (125) is configured to generate a magnetic field and defines a second magnetic moment vector (126),
   wherein the second magnetic body (125) is connected to the eraser body (110) such that the second magnetic moment vector (126) extends non-coaxial to the first magnetic moment vector (121).
40. The method (600) according to any one of embodiments 1 to 25, wherein the eraser device (100) is an eraser device (100) according to any one of embodiments 29 to 39.
41. A system (10) for erasing detection and/or tracking, the system (10) comprising:
   an eraser device (100) comprising an eraser body (110) and a magnetic body (120) connected to the eraser body (110), the eraser device (100) being configured for an erasing operation on an interaction surface (210), and
   a plurality of magnetometers (300) configured to create a sensing volume and configured to measure a magnetic field associated with the magnetic body (110),
   wherein the system (10) is configured to determine a location of the eraser device (100) based on the magnetic field measurements, and
   wherein the system (10) is configured to detect and/or track an erasing operation of the eraser device (100) on the interaction surface (210) based on eraser device information related to the eraser device (100), interaction surface information and the determined eraser device location.
42. The system (10) according to embodiment 41, wherein the eraser device (100) is an eraser device (100) according to any one of embodiments 29 to 39.
43. The system (10) according to embodiment 41 or embodiment 42, wherein the system (10), more specifically a processing unit (400) of or coupled with the system (10), is configured to execute the computer-implemented method (600) according to embodiment 25.
44. The system (10) according to any one of embodiments 41 to 43, further comprising an interaction support (200) comprising the interaction surface (210), wherein the plurality of magnetometers (300) is connected to the interaction support (200).
45. The system (10) according to embodiment 44, wherein the interaction support (200) is a whiteboard, a blackboard or an interactive screen, and wherein the interaction surface (210) is a whiteboard surface, a blackboard surface or an interactive screen surface.
46. The system (10) according to any one of embodiments 41 to 45, wherein the system (10) is configured to determine the location of the eraser device (100) in at least five degrees of freedom based on the magnetic field measurements.
47. The system (10) according to any one of embodiments 41 to 46, wherein the system (10) is free of a pressure sensor or pressure sensing matrix.
48. Use of an eraser device (100) according to any one of embodiments 29 to 39 with a tracking system comprising a plurality of magnetometers (300) and being configured for detecting and/or tracking an erasing operation of the eraser device (100) on an interaction surface (210).

### REFERENCE NUMERALS

- X: first reference axis
- Y: second reference axis
- Z: vertical reference axis
- dₓ: first eraser device axis
- d_{y}: first eraser device axis
- d_{z}: third eraser device axis
- U: user
- M: sensing volume
- A, B: contact conditions
- n: normal on interaction surface
- w: width of eraser device
- h: height of eraser device
- x: body longitudinal axis
- L: length of eraser device
- D: diameter of eraser device
- m: magnetic body longitudinal axis
- α: tilting angle
- S, G, T: settings
- 10: system
- 100: eraser device
- 110: eraser body
- 111: main body portion
- 112: eraser portion
- 113: erasing surface
- 120: magnetic body
- 121: magnetic moment vector
- 125: second magnetic body
- 126: second magnetic moment vector
- 200: interaction support
- 210: interaction support surface
- 300: magnetometers
- 400: processing unit
- 500: output device

## Claims

1. A method (600) for erasing detection and/or tracking, the method (600) comprising:
a) obtaining eraser device information (610) related to an eraser device (100) comprising an eraser body (110) and a magnetic body (120) connected to the eraser body (110), the eraser device (100) being configured for an erasing operation on an interaction surface (210),
b) obtaining magnetic field measurements (620) associated with the magnetic body (120) and measured with a plurality of magnetometers (300),
c) obtaining interaction surface information (630),
d) determining a location (640) of the eraser device (100) based on the magnetic field measurements,
e) detecting and/or tracking an erasing operation (650) of the eraser device (100) on the interaction surface (210) based on the eraser device information, the interaction surface information and the determined eraser device location.

2. The method (600) according to claim 1, wherein detecting and/or tracking the erasing operation (650) comprises:
detecting and/or tracking a contact condition between the eraser device (100) and the interaction surface (210).

3. The method (600) according to claim 2, wherein detecting and/or tracking a contact condition comprises determining a contact pressure between the eraser device (100) and the interaction surface (210), more specifically wherein the contact pressure is the pressure exerted by the eraser device (100) on the interaction surface (210).

4. The method (600) according to any one of the preceding claims, wherein the determined location of the eraser device comprises a position and/or orientation of the eraser device (100),
wherein detecting and/or tracking an erasing operation (650) comprises determining a position and/or orientation of the eraser device (100) relative to the interaction surface (210).

5. The method (600) according to claim 4, wherein detecting and/or tracking a contact condition comprises:
determining a contact shape and/or a contact area between the eraser device (100) and the interaction surface (210), and wherein determining a contact shape and/or contact area is based on the determined position and/or orientation of the eraser device relative to the interaction surface and based on the eraser device information.

6. The method (600) according to claim 4, when dependent on claim 3, wherein determining a contact pressure is based on the determined position and/or orientation of the eraser device relative to the interaction surface and the eraser device information.

7. The method according to claim 6, wherein determining a contact pressure is further based on the determined contact shape and/or contact area, and wherein determining a contact pressure comprises:
defining the contact pressure by accessing a database comprising a predefined data list which correlates contact shape and/or contact area data with contact pressure data.

8. The method (600) according to any one of the preceding claims, wherein eraser device information comprises one or more of:
eraser device geometry information,
eraser device characteristics information, and
magnetic body arrangement information.

9. The method according to claim 8, when dependent on claim 5, wherein determining a contact shape and/or contact area comprises:
determining a virtual volume of the eraser device (100) based on the eraser device geometry information,
determining a virtual interaction surface based on the interaction surface information,
determining a virtual intersection of the virtual volume of the eraser device (100) and the virtual interaction surface based on the magnetic body arrangement information and determined eraser device location, and
determining the contact shape and/or contact area based on the virtual intersection and eraser device characteristics information.

10. The method (600) according to any one of claims 2 to 9, wherein the magnetic body (120) is configured to generate a magnetic field and wherein the magnetic body (120) defines a magnetic moment vector (121) that has a fixed orientation to an eraser surface (113) of the eraser device (100), wherein detecting and/or tracking a contact condition between the eraser device (100) and the interaction surface (210) comprises:
defining the contact condition as a flat surface contact between the eraser surface and the interaction surface (210) when an angle (α) between the magnetic moment vector (121) and the interaction surface (210) is below a threshold value, and
defining the contact condition as a partial surface contact or edge contact when the angle (α) between the magnetic moment vector (121) and the interaction surface (210) is above the threshold value.

11. The method (600) according to any one of the preceding claims, wherein obtaining eraser device information (610) comprises:
detecting a magnetic signature of the magnetic body (120) based on the obtained magnetic field measurements,
determining an eraser device type based on the detected magnetic signature,
accessing a database comprising a predefined data list which correlates eraser device information with the eraser device type, and
retrieving eraser device information of the predefined data list based on a match of the eraser device type and the detected magnetic signature.

12. An eraser device (100), comprising:
an eraser body (110) comprising a longitudinal axis (x) and an eraser surface (113), and
a magnetic body (120) connected to the eraser body (110),
wherein the magnetic body (120) is configured to generate a magnetic field and defines a magnetic moment vector (121),
wherein the eraser device (100) comprises a cuboid shape having the longitudinal axis (x) and wherein the magnetic body (120) is connected to the eraser body (110) such that the magnetic moment vector (121) extends substantially parallel to the eraser surface (113) and/or the longitudinal axis (x), or,
wherein the eraser device (100) comprises a cylindrical shape having the longitudinal axis (x) and wherein the magnetic body (120) is connected to the eraser body (110) such that the magnetic moment vector (121) extends substantially perpendicular to the eraser surface (113) and substantially parallel to the longitudinal axis (x).

13. The eraser device (100) according to claim 12, wherein the eraser body (110) comprises a main body portion (111) and an eraser portion (112) connected to the main body portion (111), wherein the eraser portion (112) defines the eraser surface (113).

14. A system (10) for erasing detection and/or tracking, the system (10) comprising:
an eraser device (100) comprising an eraser body (110) and a magnetic body (120) connected to the eraser body (110), the eraser device (100) being configured for an erasing operation on an interaction surface (210), and
a plurality of magnetometers (300) configured to create a sensing volume and configured to measure a magnetic field associated with the magnetic body (110),
wherein the system (10) is configured to determine a location of the eraser device (100) based on the magnetic field measurements, and
wherein the system (10) is configured to detect and/or track an erasing operation of the eraser device (100) on the interaction surface (210) based on eraser device information related to the eraser device (100), interaction surface information and the determined eraser device location, and wherein the eraser device (100) is an eraser device (100) according to any one of claims 12 to 13.

15. The system (10) according to any one of claims 14, further comprising an interaction support (200) comprising the interaction surface (210), wherein the plurality of magnetometers (300) is connected to the interaction support (200).
